Europäisches Patentamt

European Patent Office

Office européen des brevets

(19)

(11) Veröffentlichungsnummer: **0 309 507 B1**

(12)

# EUROPÄISCHE PATENTSCHRIFT

(45) Veröffentlichungstag der Patentschrift:
04.09.91 Patentblatt 91/36

(51) Int. Cl.⁵: **B29C 33/38, B28B 7/34**

(21) Anmeldenummer: **88902780.1**

(22) Anmeldetag: **08.04.88**

(86) Internationale Anmeldenummer:
**PCT/CH88/00074**

(87) Internationale Veröffentlichungsnummer:
**WO 88/07921 20.10.88 Gazette 88/23**

(54) **FORMKÖRPER ZUM TIEFZIEHEN VON FOLIEN UND VERGIESSEN VON WERKSTOFFEN.**

(30) Priorität: **09.04.87 CH 1365/87**

(43) Veröffentlichungstag der Anmeldung:
**05.04.89 Patentblatt 89/14**

(45) Bekanntmachung des Hinweises auf die
Patenterteilung:
**04.09.91 Patentblatt 91/36**

(84) Benannte Vertragsstaaten:
**AT BE CH DE FR GB IT LI LU NL SE**

(56) Entgegenhaltungen:
EP-A- 0 121 929
WO-A-83/02251
DE-A- 2 204 584
FR-A- 2 188 491
FR-A- 2 196 602
FR-A- 2 359 691
GB-A- 2 167 014

(56) Entgegenhaltungen:
US-A- 4 631 228
Glass & Ceramics, Band 41, No 5/6, Mai-Juni
1984, Plenum Publ. Corp. ( New York, US ), V.
M. Kaptsevitch et al : "Porous metal molds for
plastic forming of ceramic parts", Seiten
238-240

(73) Patentinhaber: UNIPORT
POLYESTER-FORMENBAU TH. HIRZEL
Bernstrasse 9B
CH-8964 Rudolfstetten (CH)
Patentinhaber: Hirzel, Theodor
Hasenbergstrasse 402
CH-8967 Widen (CH)

(72) Erfinder: HIRZEL, Theodor
Hasenbergstrasse 402
CH-8967 Widen (CH)

(74) Vertreter: Blum, Rudolf Emil Ernst et al
c/o E. Blum & Co Patentanwälte Vorderberg 11
CH-8044 Zürich (CH)

EP 0 309 507 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue Saint-Denis, 75001 PARIS

## Beschreibung

Die Erfindung betrifft einen porösen Formkörper nach Anspruch 1, Verfahren zu dessen Herstellung nach Anspruch 10 oder 11 sowie Verwendungen des Formkörpers nach Anspruch 12 oder 14.

Anwendungsmöglichkeiten für solche Formkörper liegen auf dem Gebiet der Folienverformung, insbesondere plastischer Folien und des Folientiefziehens als solchem, etwa für Blisterpackungen oder ähnlichem. Weitere Anwendungen liegen bei zu vergiessenden Formmassen, bei welchen beim Vergiessen eine als Trennmittel eingesetzte Folie vorgesehen wird. Ein Anwendungsgebiet betrifft insbesondere die Herstellung von Gussteilen aus kunststoffhaltigen Materialien, insbesondere solche, welche Griess oder Granulat enthalten, aber auch zementgebundene oder wasserlösliche Formmassen.

Poröse Formen aus Metallpulver sowie aus Metallpulver-Keramikmischungen sind bekannt, so z.B. aus der europäischen Patentanmeldung EP-A 121929 sowie aus Glass & Ceramics, Band 41, Nr. 5/6, 1984, S. 238-240. Diese Formen sind aufwendig in der Herstellung, da ein Sintervorgang mit hoher Temperatur notwendig ist.

Solche Sinterformen besitzen ferner eine relativ grobe Oberfläche, und beim Sintern besteht die Gefahr, dass ein Verzug der Form auftritt.

Aus der US-PS 3166615 ist es bekannt, eine poröse Form aus Metallpartikeln und einem Bindemittel herzustellen, welche nicht gesintert werden muss. Die Lehre dieses Dokumentes verlangt ausdrücklich, dass dabei Metallpartikel von untereinander gleicher Grösse verwendet werden, um die Porosität sicherzustellen (Spalte 4, 3.40 ff). Es wird zwar gelehrt, dass die Form auch mechanisch bearbeitbar gemacht werden kann, doch ist dies mit dem Verlust der Porosität verbunden, da die Poren der Form vorher mit Kunstharz gefüllt werden müssen (Spalte 3, Zeilen 52 ff). Aus der US-PS 4631228 ist ferner eine poröse Form aus Metall/Kohlenstoff/Kunstharzfibern und Bindemittel bekannt.

Es zeigt sich in der Praxis, dass die mechanische Bearbeitbarkeit einer Form zur Vornahme von Aenderungen durch z.B. Fräsen, Bohren, Schleifen usw., eine wesentliche Vereinfachung des Formenbaus erbrächte. Ein bearbeitbares Formmaterial ermöglichte es auch, die eigentliche Form durch mechanische Bearbeitung, z.B. durch eine numerisch gesteuerte Fräsmaschine auf rationelle Weise herzustellen.

Keines der oben genannten Dokumente zeigt indes eine einfach herstellbare Form, welche sowohl porös als auch unter Beibehaltung der Porosität mechanisch bearbeitbar ist.

Der Erfindung liegt deshalb die Aufgabe zugrunde, einen porösen Formkörper zu schaffen, welcher unter Beibehaltung der Porosität mechanisch bearbeitbar ist, welcher einfach herstellbar ist und welcher eine hohe Oberflächenfeinheit aufweisen kann.

Dies wird bei einem porösen Formkörper der eingangs genannten Art mit den kennzeichnenden Merkmalen des Anspruchs 1 erreicht.

Ueberraschenderweise hat sich ergeben, dass die Verwendung von unregelmässig geformten und ungleich grossen Metallgranulatkörnern im angegebenen Grössenbereich die poröse Form bearbeitbar macht, ohne dass die Porosität darunter leidet.

Die erfindungsgemässe Form kann gebohrt, gefräst, gesägt, geschliffen werden, ohne dass es zu einem Verstopfen der Poren kommt. Dem Formenbauer eröffnen sich damit neue Möglichkeiten zur Aenderung und Herstellung von porösen Formen.

Demzufolge betrifft die Erfindung ferner ein Verfahren zur Herstellung eines porösen Formkörpers nach Anspruch 1. Dabei wird eine Mischung aus Metallgranulat und Kunstharz in einer Form zu einem Block mit einem zunächst im wesentlichen ebenem Formkörperabschnitt geformt, und nach Aushärtung des Kunstharzes wird die eigentliche Formoberfläche durch mechanische Bearbeitung des Blocks erzeugt.

Es kann also zunächst ein Block aus dem porösen Material gebildet werden, in welchen erst nachträglich durch den Formenbauer mit bekannten Bearbeitungstechniken die eigentliche Form eingearbeitet wird und wobei die Porosität des Blockmaterials erhalten bleibt.

Dadurch, dass die formgebende Oberfläche vollständig und gleichmässig mit Poren durchsetzt ist, kann beim Folientiefziehen die in Wärme gehaltene Folie vollständig und gleickmässig in Sekundenschnelle gegen die formgebende Oberfläche gepresst werden. Damit wird ein einwandfreies Anliegen der Folie an alle Konturen der formgebenden Oberfläche ermöglicht.

Für qualitativ hochstehende Produkte muss ein Formkörper ebensolcher Qualität vorliegen. Häufig zeigt es sich, dass bei komplizierten Gebilden bzw. Werkstückformen eine einwandfreie formgebende Oberfläche mit genügend geringen Toleranzen nicht auf Anhieb herzustellen ist. Ein entsprechender Ausschuss von fertigen Formkörpern ist die Folge. Da der erfindungsgemässe Formkörper durch seine spezielle Materialzusammensetzung mechanisch bearbeitet werden kann, ist hier die Lösung für die Herstellung von Formkörpern höchster Qualität, insbesondere bezüglich der Masshaltigkeit, sowie der Abbildbarkeit feinster Oberflächenstrukturen, gegeben. Mit Hilfe eines ersten tiefgezogenen Folienabschnittes oder vergossenen Werkstückes können unerwünschte Abweichungen in der Produktion erkannt und eine entsprechende Nachbearbeitung des Formkörpers vorgenommen werden. Diese Nachbearbeitung kann auf beliebige Art, z.B. durch Bohren, Fräsen oder Schleifen erfolgen. Diese Möglichkeit zur mechanischen Nachbearbeitung ist ein überraschender Effekt der erfindungsgemässen Materialzusammensetzung des Formkörpers. Poröse, aus Granulat und Kunststoffbindemittel bestehende Körper herkömmlicher Art zeigen nämlich beim mechanischen Bearbeiten zwei Effekte : 1. Verstopfen entlang der Schnittfläche der Poren aufgrund des schmierenden Kunststoffbindemittels, und 2. reissen kleine Materialpartikel aus der Schnittfläche heraus, so dass diese nicht mehr einwandfrei glatt ist. Die oben beschriebenen Eigenschaften der formgebenden Oberfläche sowie des Formkörpers, soweit er aus diesem Material hergestellt ist, werden erfindungsgemäss dann sichergestellt, wenn ein feinkörniges Granulat oder Griess mit im wesentlichen ohne Staubanteile, d.h. ohne Körner mit kleinerem Durchmesser als 10 µm, verwendet wird. Dadurch wird ein Verstopfen der Poren verhindert. Weiter muss ein Optimum zwischen der Schüttdichte und damit erreichbare Festigkeit und Oberflächenglätte einerseits und ausreichender Porosität für die Durchströmung andererseits gefunden werden. Dies wird dadurch erreicht, dass eine durchschnittliche Korngrösse von einer gewissen Bandbreite Verwendung findet. Erfindungsgemäss besteht das Granulat aus einer Korngrössenmischung von 10 µm bis 450 µm, bei einem bevorzugten Ausführungsbeispiel von 45-160 µm. Bei höchsten Ansprüchen an die formgebende Oberfläche des Formkörpers können Korngrössen von unter 40-45 µm verwendet werden; da solche sich aber nur mit grossem Aufwand frei von Staubteilen aussieben lassen, ist deren Verwendung Spezialfällen vorbehalten. Wesentlich ist, wie erwähnt, dass im Granulat keine Körner unter 10 µm Durchmesser vorhanden sind, da diese zum Staubanteil des Granulats gehören.

Weiter ist wichtig, dass das Granulat aus Körnern mit einer komplexen Form besteht. Damit bleiben auch bei hoher Schüttdichte noch Poren offen.

Bevorzugterweise wird deshalb ein Granulat aus verdüstem oder gerissenem Material, insbesondere Metall, verwendet. Diese Granulatkörner haben eine komplexe Form, die in der Fachterminologie als spratzig bezeichnet wird. Infrage kommt Aluminium, dieses ist leichtgewichtig und leicht bearbeitbar ; Stahl, welcher billig ist, jedoch zum Oxidieren neigt und schwer ist ; Kupfer, welches eine gute Wärmeleitfähigkeit aufweist, aber teuer ist.

Das Granulat ist mit einem zunächst flüssigen, nach der Verarbeitung aber härtenden Bindemittel zu mischen. Dieses Bindemittel besteht aus einem Kunstharz. Damit wird bei der späteren mechanischen Bearbeitung die Gefahr des Ausreissens von Materialpartikeln aus der Schnittfläche vermieden. Epoxidharze haben sich für diesen Verwendungszweck besonders bewährt.

Die Mischung aus Granulat und Bindemittel soll bevorzugterweise eine sogenannte "trockene Mischung" sein. Dies bedeutet, dass nach guter Durchmischung idealerweise jedes Granulatkorn nur mit einem dünnen Bindemittelfilm überzogen ist und z.B. in Höhlungen des komplex geformten Granulats kein freies Bindemittel mehr vorliegt. Auch damit wird die Porenverstopfung wirksam vermieden.

Bei der erfindungsgemässen Materialzusammensetzung können aber die Körner und das Bindemittel direkt gemischt werden ; es ist kein zeit- und arbeitsaufwendiger Beschichtungsprozess notwendig, wie z.B. in der US-PS 3166615 beschrieben.

Solch eine trockene Mischung entsteht dann, wenn z.B. 83 Gewichtsanteile von Aluminiumgranulat mit Körnern von 45-160 µm und 17 Gewichtsanteile Epoxidharz vermischt wird.

Der erfindungsgemässe Formkörper, bestehend aus den oben beschriebenen Materialien, kann auf im wesentlichen drei Arten hergestellt werden.

1. Herstellung der formgebenden Oberfläche sowie des gesamten Formkörpers mit Hilfe einer Mutterform bzw. einem Positiv auf an sich bekannte Weise : die Mutterform wird mit einem Trennmittel versehen ; danach werden diejenigen Partien der Formfläche, welche nicht die spätere formgebende Oberfläche des herzustellenden Formkörpers abbilden, laminiert (dieser Schritt kann auch am Schluss vollzogen werden) ; Einbringen von pneumatischen Leitungen, Inserts und dergleiche, welche direkt in den porösen Formkörper eingearbeitet werden sollen, in die Mutterform ; Zusammenstellen und gute Vermischung der Mischung aus Granulat und Bindemittel ; Einfüllen dieses Gemischs in die Mutterform, indem es vorzugsweise durch ein Sieb gerieben wird ; schichtweise Einstampfeln und Rütteln des eingefüllten Gemisches in der Mutterform und anschliessend Vornahme einer Wärmebehandlung je nach dem verwendeten Granulat und Bindemittel ; Entformen des Formkörpers, Befreiung von Trennmittel durch Waschen oder Schleifen und letztlich Austempern zur Erreichung der optimalen Härte und/oder Festigkeit ; Bedecken der Aussenflächen des Formkörpers mit Ausnahme seiner formgebenden Oberfläche durch eine Oberflächenschicht, welche die Poren verschliesst. Dabei soll besonders angemerkt werden, dass, da der Formkörper mechanisch bearbeitbar ist, Leitungen für Ueber- und Unterdruckerzeugung im Formkörper oder andere Armaturen auch nachträglich eingearbeitet werden können.

2. Mit Hilfe der oben angegebenen Vorgehensschritte wird ein poröser Formkörper beliebiger Kontur hergestellt und die gewünschte formgebende Oberfläche und mechanische Bearbeitung, wie Bohren, Fräsen, Drehen und Schleifen usw., eingearbeitet. Diese Herstellungsart war bis anhin bei porösen Formen nicht möglich.

3. Auf einen bestehenden porösen Formkörperblock, welcher vorzugsweise mit den notwendigen Armaturen bereits ausgerüstet ist, wird ein zusätzlicher Formkörperblock aufgebracht. Dieser zusätzliche Formkörperblock kann eine formgebende Oberfläche besitzen, welche durch Vergiessen oder durch mechanische Bearbeitung hergestellt ist. Der Vorteil bei dieser dritten Art liegt darin, dass damit der erfindungsgemässe Formkörper aus Modulen aufgebaut ist. Ein Unterdruckoder Kühlmodul, welches die notwendigen Armaturen enthält, bildet ein stets wiederverwendbares Grundmodul. Auf dieses wird dann ein Modul mit einer formgebenden Oberfläche angebracht, indem beide Module z.B. aufgerauht werden und mit einer geeigneten Mischung aus Granulat und Bindemittel miteinander verbunden werden. Danach müssen nur noch Aussenflächen der Verbindungsstellen, welche nicht zur formgebenden Oberfläche gehören, mit einer geeigneten Oberflächenschicht abgedeckt werden. Da der so entstandene Formkörperblock einwandfrei mechanisch bearbeitbar ist, kann das Modul mit der formgebenden Oberfläche jederzeit wieder mechanisch abgetrennt werden.

Dank diesen drei Alternativen zur Herstellung eines erfindungsgemässen Formkörpers kann stets das für den konkreten Fall kostengünstigste Herstellungsverfahren gewählt werden. Dabei kann z.B. nach überhaupt vorhandenen Formkörpern oder nach bereitstehenden Bearbeitungseinrichtungen usw. entschieden werden. Weiter besitzt der Formenbauer eine unbeschränkte Möglichkeit, das Werkzeug ohne Qualitätseinbusse zu modifizieren oder zu reparieren. Es ist klar, dass sich auf diesem Weg schnell und mit wenig Aufwand Formwerkzeuge herstellen lassen, welche damit auch für die Herstellung von Einzelstücken, wie Muster und Prototypen, nicht zuletzt in wirtschaftlicher Hinsicht geeignet sind.

Besondere Ausführungsbeispiele von Formwerkzeugen können die folgenden Merkmale aufweisen : Gewisse Bereiche hinter dem Formkörper können durch kostengünstige, vorzugsweise poröse Füllstoffe gebildet werden. Weiter sind grobkörnige oder grobporöse Hinterfütterungen möglich. Zur Erhöhung der Abriebfestigkeit, insbesondere von scharfkantigen Konturen der formgebenden Oberfläche, kann eine poröse Metallschicht z.B. durch Flammspritzen aufgebracht werden. Zur Regelung der Temperatur können Heiz- und/oder Kühlelemente direkt in den Formkörper eingelassen werden. Weiter können Führungen, Befestigungselemente und ähnliches direkt in den Formkörper eingelassen sein. Die formgebende Oberfläche kann Ausnehmungen aufweisen. In diese Ausnehmungen werden Einsätze aus demselben porösen Material eingelegt. Es sind aber auch Einsätze aus Stroh, Bambus, Leder usw. denkbar. Solche Einsätze können z.B. verschiedene Nummern tragen und sind leicht und beliebig häufig auswechselbar. Weiter sind Einsätze denkbar, welche zum Entformen des Werkstückes in die Ausnehmungen zurückgezogen werden können. Weiter können in Entformungsrichtung mit Hilfe von Inserts verschieblich in den Ausnehmungen gehaltene Einsätze Anwendung finden. Damit sind Werkstückformen realisierbar, welche üblicherweise nur mit geteilten Formen hergestellt werden können. Es wird speziell hervorgehoben, dass die letztgenannten Varianten nur darum realisiert werden können, weil das poröse, aus Granulat und Bindemittel bestehende Material entsprechend der Rezeptur der vorliegenden Erfindung mechanisch bearbeitbar ist. Müssten solche Einsätze auf die übliche Weise durch Vergiessen hergestellt werden, wären die Kosten astronomisch hoch.

Zusammenfassend werden durch den erfindungsgemässen Formkörper die folgenden Vorteile erzielt : Feine, flächendichte Porosität, damit sind feinkonturige formgebende Oberflächen und entsprechend feine Folienverformungen möglich ; es sind sehr feine Oberflächen erreichbar, damit müssen keine ungewollte Folienmaserungen oder einstrukturierte Oberflächen in Kauf genommen werden ; durch die einwandfreie Porenverteilung folgen gute Strömungsverhältnisse, so dass hohe und schnelle Durchströmungsleistung, gute Kühlung und schnelle Taktzeiten des Folientiefziehens oder Vergiessens von kunststoffhaltigen Vergussmassen ermöglicht sind ; durch den problemlosen Formenbau entfällt die notwendige Erfahrung für das Anbringen von Löchern bzw. Düsen, es sind keine praktischen Verifikationsversuche notwendig ; kostengünstiger Formenbau, insbesondere ab Modell, ist möglich, dies gilt vor allem für Mehrfachformen ; die gleichmässige, volumendichte Porosität erlaubt Modifikationen und Reparaturen sowie Nachbearbeitung der formgebenden Oberfläche, wobei die modifizierten oder geänderten Oberflächenabschnitte durchwegs von konstanter Qualität sind ; und durch die hohe mechanische Festigkeit folgt eine lange Lebensdauer, damit sind feine Konturen und dünne Wandstärken möglich.

Die Erfindung wird anhand der in den Figuren dargestellten Ausführungsbeispiele näher erläutert. Es zeigt :

Fig. 1 schematisch ein zweiteiliges Formwerkzeug für Herstellung von z.B. Blumenkisten,

Fig. 2 schematisch einen Querschnitt durch ein einteiliges Formwerkzeug,

Fig. 3 ein in einen die Armaturen aufweisenden Gegenkörper einsetzbares Formwerkzeug.

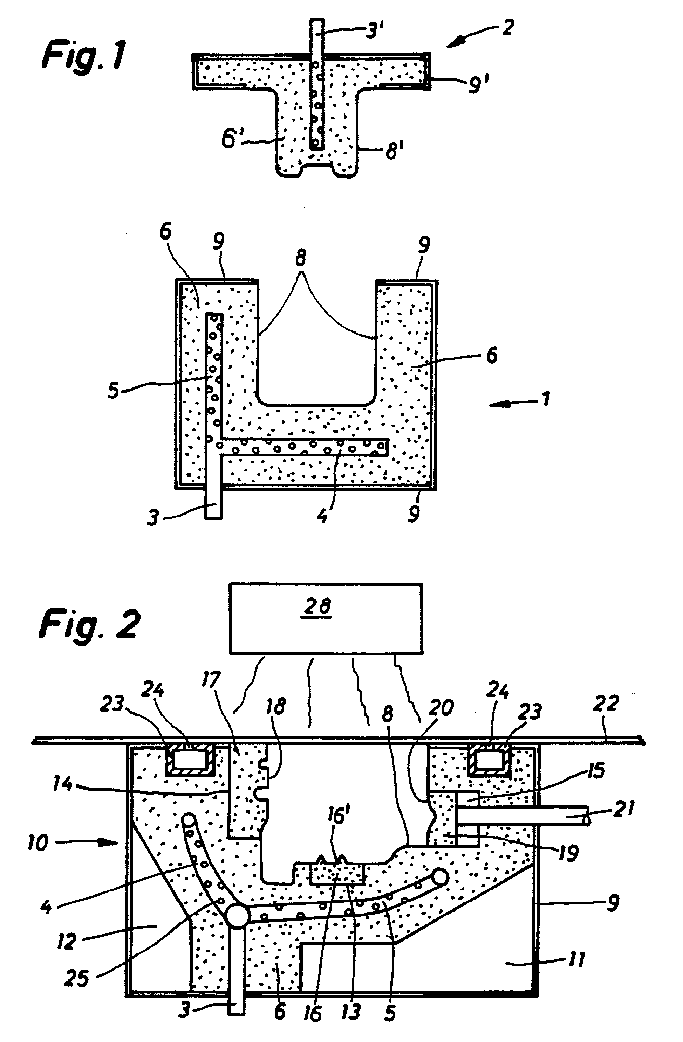

Fig. 1 zeigt ein zweiteiliges Formwerkzeug. Dargestellt sind die Formwerkzeugteile 1 und 2. Der Formwerkzeugteil 1 besitzt ein Unterdruckrohr 3, welches sich in seinem Innern in die Aeste 4 und 5 verzweigt. Wird am Unterdruckrohr 3 Unterdruck angelegt, entsteht im gesamten, porösen Formkörper 6 ein Luftstrom, welcher durch die Poren des formgebenden Oberflächenabschnittes 8 in den Formkörper eintritt, durch ihn hindurchfliesst und durch das Rohr 3 den Formkörper wieder verlässt. Die übrigen Oberflächenabschnitte (Aussenflächen) des Formkörpers sind mit einer die Poren verstopfenden, einen Mantel 9 bildenden Oberflächenschicht bedeckt, so dass Luft nur durch den formgebenden Oberflächenabschnitt 8 in den Formkörper eintreten kann. Selbstverständlich ist es auch möglich, von der Aussenseite her an den formgebenden Oberflächenabschnitt 8 Ueberdruck anzulegen, wobei dann jedoch im Formkörper dieselben, oben beschriebenen Strömungsverhältnisse herrschen. Besonders wichtig ist es, dass aufgrund der gleichmässig feinen Porosität des Körpers ein nahezu gleich verteilter Luftstrom durch den Formkörper hindurch besteht.

Bei einer praktischen Ausführungsform besteht das Gemisch für den Formkörper aus Metallgranulat mit einer Korngrösse von 10–450 µm und Epoxidharz als Bindemittel im Mischungsverhältnis von 83 Gewichtsteilen Granulat und 17 Gewichtsteilen Harz. Die Temperung erfolgt während 12 Stunden bei einer Temperatur von 130°C, mit einer Vor- und Nachtemperung von je 6 Stunden bei 60°C. Die Belagsstärke eines eventuellen Metallbelages liegt in der Grössenordnung von 0,1 mm.

Der Formwerkzeugteil 2 mit dem Formkörper 6', ist als Gegenstück zum Formwerkzeugteil 1 ausgebildet. Er besitzt einen formgebenden Oberflächenabschnitt 8'. Ein Unterdruckrohr 3' erfüllt denselben Zweck wie das Unterdruckrohr 3'. Obschon mit jedem dieser Formwerkzeugteile eine Folie tiefgezogen werden kann, ist leicht ersichtlich, dass die vorliegende Apparatur dem Vergiessen von kunststoffhaltigen Werkstoffen dienen soll. Nachdem die formgebenden Oberflächenabschnitte 8, 8' mit einer Kunststoffolie belegt worden sind und an diesen Oberflächen 8, 8' mittels aufrechterhaltenem Unterdruck fest gehalten werden, kann z.B. Polymerbeton in den Formwerkzeugteil 1 gegeben werden. Da Polymerbeton in der Regel eine ausserordentlich hohe Viskosität aufweist, empfiehlt es sich nicht, die Polymerbetonmasse nur durch Druck beim Zusammenfügen der Werkzeugteile 1 und 2 zu verteilen. Es hat sich gezeigt, dass mit Hilfe von Rütteln mit nur einer Schwingungsrichtung die Verteilung der Polymerbetonmasse am leichtesten erfolgt.

Nachdem das vergossene Werkstück angehärtet ist, kann es entformt werden. Dies geschieht am leichtesten dadurch, dass durch die Unterdruckrohre 3, 3' ein Ueberdruck angelegt wird, welcher die als Trennmittelschicht ausgebildete Folie von den formgebenden Oberflächenabschnitten 8, 8' abhebt. Speziell im Fall des Formwerkzeugteils 2 ist es jedoch nützlich, wenn das angehärtete Formteil mit Hilfe der an den Rändern überstehenden Folie abgezogen werden kann. Nach einem ersten Abheben des Formteils von seiner formgebenden Oberfläche, hier der Fläche 8', können nämlich Undichtheiten entstehen, so dass das Anlegen von Ueberdruck nicht weiterhilft.

Fig. 2 zeigt schematisch ein Ausführungsbeispiel eines Formwerkzeuges mit mehreren Abschnitten mit sehr kompliziert ausgebildeter formgebenden Oberfläche 8. Selbstverständlich könnte ein weiterer Formwerkzeugteil eingesetzt werden, um dem zu vergiessenden Werkstück, wie am Beispiel von Fig. 1 gezeigt, einen z.B. U-förmigen Querschnitt zu geben. Der poröse Formkörper 6 erstreckt sich nicht durch den gesamten Querschnitt des Formwerkzeuges 10. Da gewisse Granulate, z.B. Aluminium- oder Kupfergranulate recht teuer sind, kann in den Bereichen 11 und 12 ein Füllstoff verwendet werden. Denkbar sind z.B. Sand oder Schaumstoff. Wichtig ist aber, dass die formgebende Oberfläche 8 derart von einem Bereich aus porösem Material umgeben ist, dass eine einwandfreie Luftströmung durch die Poren hindurch gegen die Aeste 4 und 5 des Unterdruckrohres 3 bestehen kann. Es soll betont werden, dass für die Verlegung des Unterdruckrohres 3 mit seinen Aesten 4, 5 dank der sehr guten Strömungseigenschaften im erfindungsgemäss zusammengemischten porösen Material ein weiter Toleranzbereich besteht. Es sind also keine speziellen Kenntnisse oder Erfahrungwerte nötig, um die Unterdruckarmaturen im Formkörper zu verlegen. Weiter dargestellt sind Ausnehmungen 13, 14 und 15 in der formgebenden Oberfläche 8. Da diese Ausnehmungen im porösen Material eingearbeitet sind, unterscheiden sich ihre Oberflächen nicht von der restlichen formgebenden Oberfläche 8. Dies ist ausserordentlich wichtig, da auch durch die Oberflächenabschnitte der Ausnehmungen 13, 14 und 15 im gleichen Masse Luft hindurchströmen muss, wie durch die formgebende Oberfläche 8. In der Ausnehmung 13 ist ein Einsatz 16 eingelegt. Dieser Einsatz besitzt einen individuellen Oberflächenabschnitt 16'. In der Ausnehmung 14 ist ein Einsatz 17 eingelegt. Dieser Einsatz 17 besitzt einen individuellen formgebenden Oberflächenabschnitt 18. Da der Oberflächenabschnitt 18 seitlich verlaufende Vertiefungen aufweist, wäre eine Entformung des fertig vergossenen Werkstückes nicht möglich, wenn nicht der Einsatz 17 beim Entformen aus dem Formwerkzeug 10 hinausbewegt werden könnte. In die Ausnehmung 15 ist ein Einsatz 19 eingelegt. Dieser Einsatz besitzt einen individuellen Oberflächenabschnitt 20. Auch dieser Oberflächenabschnitt besitzt eine seitlich verlaufende Vertiefung, so dass für das Entformen des Werkstückes sichergestellt werden muss, dass der Einsatz 19 in die Ausnehmung 15 hineingezogen werden kann. Diese seitliche Verschiebung kann mittels des Hebels 21 bewirkt werden.

Es ist klar, dass mit Hilfe der oben beschriebenen Einsätze nicht nur ausserordentlich komplizierte Werkstückformen ermöglicht werden, sondern dass auch zugleich die Teile von gewissen Werkstückserien einzeln oder zu mehreren individualisiert werden können. Der Einsatz 16 könnte z.B. an seinem formgebenden Oberflächenabschnitt 16' mit Nummern versehen sein.

Es darf nicht vergessen werden, dass beim Tiefziehen der Folie 22 ein einwandfreies Anliegen letzterer auch auf den formgebenden Oberflächenabschnitten 16, 18 und 20 erfolgen muss. Dies ist nur dann möglich, wenn die Einsätze 16, 17 und 19 sehr genau in ihre Ausnehmungen eingepasst sind. Zudem müssen an den Grenzstellen zwischen Formkörper und Einsätzen genau dieselben Strömungsverhältnisse wie im restlichen Formkörper herrschen. Diese Bedingungen sind nur dann erfüllt, wenn die Porendichte und -qualität an den Oberflächen der Einsätze und der Ausnehmungen genau dieselbe ist wie im restlichen Formkörper. Dies wiederum konnte nur darum erreicht werden, weil das poröse Formkörpermaterial mechanisch bearbeitbar ist; nur so können mit vernünftigem Aufwand die Einsätze, die Ausnehmungen hergestellt und mit geringster Toleranz jeweils eingepasst werden.

Auch aus einem weiteren Grund ist es notwendig, die erfindungsgemäss mögliche gleichmässige Porendichte und -qualität entlang der formgebenden Oberfläche aufrechtzuerhalten. Die durch die Heizung 28 erwärmte Folie muss nicht nur blitzschnell sondern auch gleichmässig gegen alle formgebenden Oberflächenabschnitte herabgezogen werden. Geschieht dies nicht gleichmässig, droht an einzelnen Orten eine übermässige Verdünnung der Folie, während an anderen Orten Falten gebildet werden können. Dies bedeutet nicht nur eine gleichmässige Durchströmung der Poren der formgebenden Oberfläche 8, sondern auch eine sehr hohe Evakuierungsleistung von etwa 80 Liter pro Quadratmeter und Sekunde.

Weiter dargestellt in Fig. 2 sind Folienhalterungsmittel 23. Diese sind als Vierkantrohre ausgebildet, welche im Formkörper versenkt sind und dem Rand der formgebenden Oberfläche 8 entlang verlaufen. Vorzugsweise ist ein Oberflächenabschnitt der Profile 23 gerde in der Oberfläche des Formkörpers verlaufend anzuordnen. Die Folienhalterung geschieht wie folgt: Eine Folie 22 wird über den Formkörper gelegt. Danach wird in den Profilen 23 Unterdruck erzeugt, so dass eine Luftströmung von aussen durch die Oeffnungen 24 in die Profile 23 hinein entsteht. Damit wird die Folie 22 an die Profile 23 angesogen und von diesen festgehalten. Sobald diese Halterung zuverlässig gegeben ist, kann die Heizung 28 zur Erwärmung der Folie 22 eingeschaltet werden. Unter Umständen kann es sich empfehlen, die Folie durch Anelgen von etwas Ueberdruck durch das Rohr 3 zu stützen, bis sie vollständig weich geworden ist. Sobald sich die Folie 22 erwärmt hat, wird Unterdruck an das Rohr 3 angelegt; die Folie 22 wird sich dann in Sekundenschnelle an die formgebende Oberfläche 8 anlegen und deren feinste Konturen einwandfrei umhüllen. Natürlich ist es auch denkbar, von aussen her Ueberdruck anzuwenden, so dass durch das Rohr 3 nur verdrängte Luft entweicht.

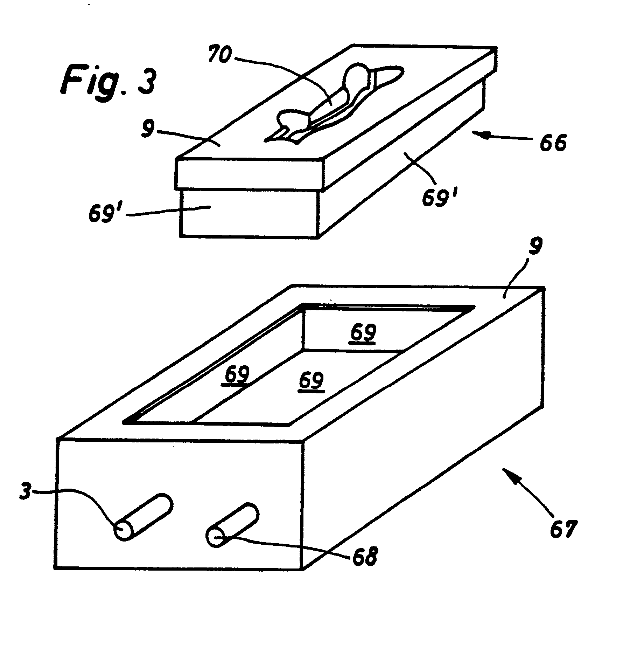

Fig. 3 zeigt einen Formkörper 66 mit einem Gegenkörper 67. Dabei besteht der Gegenkörper 67 aus porösem Material, weist eine porenverstopfende Oberflächenschicht 9 sowie Unterdruck- bzw. weitere Armaturenanschlüsse 3 und 68 auf. Auf diese Weise ist es möglich, eine Luftströmung von aussen durch die inneren Oberflächen 69 hindurch in den Unterdruckanschluss 3 zu erreichen. Wird nun der Formkörper 66 in den Gegenkörper 67 eingesetzt, so dass die einander entsprechenden Oberflächen 69 und 69' aufeinander zu liegen kommen, ergibt sich ein Durchströmeffekt von der formgebenden Oberfläche 70 des Formkörpers 66 durch den Gegenkörper 67 zum Unterdruckrohr 3, wie wenn die Grenzflächen 69, 69' gar nicht vorhanden wären. Es leuchtet sofort ein, dass auf diese Weise günstig die verschiedensten Formkörper 66 hergestellt werden können und immer wieder in demselben Gegenkörper 67 zur Verwendung gelangen. Das Herstellen einer Form zum Tiefziehen oder zum Vergiessen von Formmassen mit Kunststoffanteil wird dadurch ausserordentlich günstig. Auch dies ist wiederum darum möglich, weil die Porendichte und -qualität in den Oberflächen 69, 69' trotz der notwendigen Bearbeitung für einwandfreies Aufeinanderpassen ohne weiteres gegeben ist. Nach Gebrauch kann dann der eigentliche Formkörper 66 z.B. durch Sägen von seinem die Armaturen aufweisenden Gegenstück abgetrennt werden.

Die beschriebenen Formkörper eignen sich für die Verarbeitung von Polymeren und Beton- und Mörtelarten mit allen gängigen Kunstharzbindemitteln, sowie von Schaumstoffen, Gips und ähnlichen nichtmetallischen Materialien, zur Herstellung von Gebrauchsgegenständen, Sanitärartikeln, technischen Artikeln und anderen Formteilen. Sie eignen sich ferner für die Herstellung von Styroporerzeugnissen sowie von Sandformen (Kernen) für die Metallgiesserei.

## Patentansprüche

1. Poröser Formkörper (6, 6') zur Schaffung eines Formwerkzeuges (1, 2, 10, 66), wobei zur Schaffung des Formwerkzeuges am Formkörper mindestens ein poröser formgebender Oberflächenabschnitt (8, 8', 70) ausgebildet wird und die übrigen Oberflächenabschnitte mit einem gasdichten Mantel (9) versehen werden, sowie Mittel (3, 3') für im wesentlich gleichmässig durch alle Poren des formgebenden Oberflächenabschnittes stattfindenden Gasaustausch vorgesehen werden, und wobei der Formkörper (6, 6') gleichmässig porös und mit einem ungeschichteten Aufbau aus einer Mischung von Metallgranulat und Kunstharz gebildet ist, dadurch gekennzeichnet, dass unregelmässig geformte Metallgranulatkörner vorgesehen sind, und wobei die Grösse der Metallgranulatkörner derart gewählt ist, dass in der Mischung Körner mit Grössen im gesamten Korndurchmesserbereich von 10 µm bis 450 µm vorhanden sind, um einen Formkörper zu bilden, dessen Porosität bei mechanischer Bearbeitung erhalten bleibt.

2. Poröser Formkörper nach Anspruch 1, dadurch gekennzeichnet, dass der Korndurchmesser insbesondere im Bereich von 45 µm bis 160 µm liegt.

3. Poröser Formkörper nach Anspruch 1 oder 2, dadurch gekennzeichnet, dass das Granulat aus verdüstem Material spratziger Form besteht.

4. Poröser Formkörper nach einem der vorangehenden Ansprüche, dadurch gekennzeichnet, dass als Granulat Aluminiumgranulat und/oder Stahlgranulat und/oder Rupfergranulat vorgesehen ist.

5. Poröser Formkörper nach einem der vorangehenden Ansprüche, dadurch gekennzeichnet, dass als Kunstharz Epoxidharz vorgesehen ist.

6. Poröser Formkörper nach einem der vorangehenden Ansprüche, dadurch gekennzeichnet, dass Granulat und Kunstharz in einem solchen Verhältnis vorgesehen sind, dass eine trockene Mischung vorliegt, bei welcher im wesentlichen jedes Granulatkorn nur mit einem dünnen Kunstharzfilm überzogen ist.

7. Poröser Formkörper nach Anspruch 6, dadurch gekennzeichnet, dass das Verhältnis 83 Gewichtsanteile Aluminiumgranulat mit Körnern von 45 µm bis 160 µm und 17 Gewichtsanteile Epoxidharz beträgt.

8. Poröser Formkörper nach einem der vorangehenden Ansprüche, dadurch gekennzeichnet, dass der formgebende Oberflächenabschnitt (8) Ausnehmungen (13, 14, 15) für aus demselben Material wie der Formkörper bestehende Einsätze (16, 17, 19) aufweist, welche individuelle formgebende Oberflächenabschnitte (16', 18, 20) aufweisen, wobei die Einsätze quer oder längs zu der Entformungsrichtung verschiebbar sind und insbesondere für Entformung eines Formteils in die jeweilige Ausnehmung einziehbar sind.

9. Formkörper nach einem der vorangehenden Ansprüche, dadurch gekennzeichnet, dass an der nicht formgebenden Rückseite des einschichtigen, harzgebundenen Formkörpers eine Hinterfütterung (11, 12) aus Sand oder dergleichen angeordnet ist.

10. Verfahren zur Herstellung eines porösen Formkörpers nach Anspruch 1, dadurch gekennzeichnet, dass ein Gemisch aus Metallgranulat und Kunstharz zu einem ungeschichteten, porösen Block mit einer zunächst im wesentlichen ebenen Formkörperoberfläche geformt wird, und dass nach Aushärtung des Kunstharzes der formgebende Oberflächenabschnitt (8, 70) durch mechanische Bearbeitung des porösen Blocks erzeugt wird.

11. Verfahren zur Herstellung eines porösen Formkörpers nach Anspruch 1, dadurch gekennzeichnet, dass der Formkörper durch Abformung von einem Positiv oder durch Zusammensetzen aus mehreren, abgeformten oder mechanisch bearbeiteten Teilen hergestellt wird.

12. Verwendung eines Formkörpers nach Anspruch 1 zur Bildung eines Formwerkkzeuges zum Tiefziehen von sich in Wärme befindenden Kunststoffolien.

13. Verwendung nach Anspruch 12, mit einer den formgebenden Oberflächenabschnitt bedeckenden, tiefgezogenen, als Trennmittelschicht wirkenden Kunststoffolie, als Formwerkzeug für Werkstoffe, welche unterhalb der Erweichungstemperatur der Folie vergiessund anhärtbar sind, insbesondere Kunststoffe oder Mischungen mit hohem Kunststoffanteil, insbesondere Polymerbeton und Polymermörtel.

14. Verwendung eines Formkörpers nach Anspruch 1 zur Bildung eines Formwerkzeuges für Sandformen.

## Claims

1. Porous mold body (6, 6') for making a mold (1, 2, 10, 66), whereby for making said mold at least one porous shape determining mold face surface (8, 8', 70) is formed in said mold body and the remaining surfaces of said mold body are covered by a gas impermeable jacket (9), and means (3, 3') are provided for a gas exchange proceeding essentially uniformly through all pores of said shape determining mold face surface, said mold body (6, 6') being uniformly porous and having a homogeneous, unstratified structure made of a mixture of metallic particles and resin, characterized in that said metallic particles are of irregular shape and the size of said metallic particles is selected such that in said mixture particles of a size through the whole particle size range of 10 µm to 450 µm are provided, whereby a mold body of metallic particles and resin results which porosity remains intact during mechanical machining of said body.

2. Porous mold body according to claim 1, characterized in that said particle size range is in the range of 45 µm to 160 µm.

3. Porous mold body according to claim 1, characterized in that said metallic particles consist of jetted metal of scattered shape.

4. Porous mold body according to one of the preceding claims, characterized in that said metallic particles are particles of aluminium and/or steel and/or copper.

5. Porous mold body according to one of the preceding claims, characterized in that resin is an epoxy resin.

6. Porous mold body according to one of the preceding claims, characterized in that the mixture ratio of particles and resin in such that a dry mixture is provided, wherein substantially every particle is covered only by a thin resin film.

7. Porous mold body according to claim 6, characterized in that said ratio amounts to 83 parts by weight aluminium particles having a particle size of 45 μm to 160 μm and 17 parts by weight epoxy resin.

8. Porous mold body according to one of the preceding claims, characterized in that said shape determining mold face surface (8) comprises recesses (13, 14, 15) for inserts (16, 17, 19) consisting of the same material as the mold body and which comprise individual shape determining surface sections (16', 18, 20), said inserts being movable within said recesses longitudinally or laterally to the direction of extraction of a cast article for retracting said inserts in said recesses for an opening of the mold to extract a cast article from said mold.

9. Porous mold body according to one of the preceding claims, characterized in that a backfilling (11, 12) made of sand or similar material is arranged at a non shape determining side of said mold.

10. Method for producing a porous mold body according to claim 1, characterized in that a mixture of metallic particles and resin is formed to an unstratified porous block having a substantially flat mold body surface, and that after curing of said resin said shape determining mold face surface (8, 70) is formed by mechanically machining said porous block.

11. Method for producing a porous mold body according to claim 1, characterized in that said mold body is formed from a positive model or said mold body is assembled from several mold body parts, which are themselves formed from a positive model or which are formed by machining.

12. Use of a mold body according to claim 1 for making a mold for the deep drawing of heated plastic foils.

13. Use according to claim 12, wherein said plastic foil covering said mold face surface serves as a separating means layer and said covered mold serves as mold for materials which are castable and settable below the softening temperature of said foil ; especially plastic materials or mixtures having in part a plastic material specifically polymer concrete and polymer mortar.

14. Use of a mold body according to claim 1 for making a mold for sand mold cores.

## Revendications

1. Moule poreux (6, 6') pour la réalisation d'un outil de moulage (1, 2, 10, 66), dans lequel, pour la réalisation de l'outil de moulage, au moins une section de surface de formage poreuse (8, 8', 70) est réalisée sur le moule et les autres sections de surface sont pourvues d'une enveloppe étanche aux gaz (9), des moyens (3, 3') étant prévus pour qu'un échange gazeux ait lieu de manière sensiblement uniforme à travers tous les pores de la section de surface de formage, le moule (6, 6') étant uniformément poreux et étant formé d'une structure non stratifiée à base d'un mélange de produit de granulation de métal et d'une résine synthétique, caractérisé en ce que des grains de produit de granulation de métal irrégulièrement formés sont prévus, la dimension des grains du produit de granulation de métal étant sélectionnée de telle façon que, dans le mélange, il existe des grains ayant des dimensions dans l'ensemble de la gamme de diamètres de 10 μm à 450 μm pour former un moule dont la porosité est maintenue lors d'un usinage mécanique.

2. Moule poreux suivant la revendication 1, caractérisé en ce que le diamètre des grains est en particulier dans la gamme de 45 μm à 160 μm.

3. Moule poreux suivant l'une des revendications 1 et 2, caractérisé en ce que le produit de granulation est constitué d'une matière atomisée de forme irrégulière.

4. Moule poreux suivant l'une des revendications précédentes, caractérisé en ce que, comme produit de granulation, on prévoit un produit de granulation d'aluminium et/ou d'acier et/ou de cuivre.

5. Moule poreux suivant l'une des revendications précédentes, caractérisé en ce que de la résine époxyde est prévue comme résine synthétique.

6. Moule poreux suivant l'une des revendications précédentes, caractérisé en ce que le produit de granulation et la résine synthétique sont prévus dans un rapport tel qu'il y ait un mélange sec dans lequel sensiblement chaque grain de produit de granulation n'est revêtu que d'un mince film de résine synthétique.

7. Moule poreux suivant la revendication 6, caractérisé en ce que le rapport est de 83 parties en poids de produit de granulation d'aluminium ayant des grains de 45 μm à 160 μm et de 17 parties en poids de résine époxyde.

8. Moule poreux suivant l'une des revendications précédentes, caractérisé en ce que la section de surface de formage (8) présente des évidements (13, 14, 15) pour des inserts (16, 17, 19) qui sont constitués de la même matière que le moule et qui présentent des sections de surface de formage individuelles (16', 18, 20), les inserts pouvant être amenés à coulisser transversalement à ou le long de la direction de démoulage et pouvant être retirés dans l'évidement respectif en particulier pour le démoulage d'une pièce moulée.

9. Moule suivant l'une des revendications précédentes, caractérisé en ce qu'un remplissage arrière (11, 12) en sable ou en matière analogue est disposé sur le côté arrière, qui ne donne pas de forme, du moule monocouche, lié par de la résine.

10. Procédé de fabrication d'un moule poreux suivant la revendication 1, caractérisé en ce qu'un mélange de produit de granulation métallique et de résine synthétique est moulé en un bloc non stratifié, poreux, avec une surface de moule tout d'abord sensiblement plane et en ce que, après durcissage de la résine synthétique, la section de surface de formage (8, 70) est produite par usinage mécanique du bloc poreux.

11. Procédé de fabrication d'un moule poreux suivant la revendication 1, caractérisé en ce que le moule est fabriqué par moulage d'un positif ou par assemblage de plusieurs pièces moulées ou usinées par voie mécanique.

12. Utilisation d'un moule suivant la revendication 1 pour la formation d'un outil de moulage prévu pour l'emboutissage de feuilles de matière synthétique qui sont soumises à la chaleur.

13. Utilisation suivant la revendication 12, comprenant une feuille de matière synthétique qui recouvre la section de surface de formage, est emboutie et agit comme couche séparatrice, à titre d'outil de moulage pour des matériaux qui peuvent être coulés et durcis en dessous de la température de ramollissement de la feuille, en particulier des matières synthétiques ou des mélanges comprenant une haute fraction en matière synthétique, en particulier du béton au polymère ou du mortier au polymère.

14. Utilisation d'un moule suivant la revendication 1 pour la formation d'un outil de moulage pour des moules en sable.

Fig.1

Fig. 2

Fig. 3